(19) Europäisches Patentamt

European Patent Office

Office européen des brevets

(11) **EP 1 096 988 B1**

(12) **EUROPEAN PATENT SPECIFICATION**

(45) Date of publication and mention
of the grant of the patent:
**02.01.2004 Bulletin 2004/01**

(21) Application number: **99929656.9**

(22) Date of filing: **15.07.1999**

(51) Int Cl.⁷: **B01D 53/50**, B01D 53/34,
B01D 53/82

(86) International application number:
**PCT/IE1999/000064**

(87) International publication number:
**WO 2000/003789 (27.01.2000 Gazette 2000/04)**

(54) **AN EFFLUENT GAS TREATMENT PROCESS AND APPARATUS**

VERFAHREN UND VORRICHTUNG ZUR BEHANDLUNG VON ABGASEN

PROCEDE ET DISPOSITIF DE TRAITEMENT DE GAZ EFFLUENT

(84) Designated Contracting States:
**AT BE CH CY DE DK ES FI FR GB GR IE IT LI LU MC NL PT SE**

(30) Priority: **15.07.1998 IE 980569**

(43) Date of publication of application:
**09.05.2001 Bulletin 2001/19**

(73) Proprietor: **BORD NA MONA
Dublin 2 (IE)**

(72) Inventors:
• **EGAN, Imelda
County Kildare (IE)**
• **BUCKLEY, Kevin
County Kildare (IE)**

• **PHILLIPS, Ian
Dublin 14 (IE)**

(74) Representative: **O'Connor, Donal Henry et al
c/o Cruickshank & Co.,
1 Holles Street
Dublin 2 (IE)**

(56) References cited:
**DE-A- 3 321 546           GB-A- 560 782
US-A- 5 236 597**

Remarks:
The file contains technical information submitted after the application was filed and not included in this specification

## Description

### Introduction

The present invention relates to a process for the removal of effluent gases from a variety of gas streams.

Typically, the effluent gases are malodorous gases such as hydrogen sulphide ($H_2S$), metal sulphides, mercaptans and other organosulphurous gases.

The presence of significant quantities of these gases both in domestic and industrial effluent has posed a persistent problem which has become more difficult as environmental emission regulations have become more severe. A variety of procedures have been developed to remove and recover these contaminants.

One method employed in the removal of effluent gases uses "oxide boxes". This involves passing the effluent air stream through a porous bed of an activated hydrated iron oxide. The term "activated" means the bed has in some way been treated chemically or otherwise, to promote the removal of the sulphurous gases on contact with the bed. The removal operation basically comprises two processes. The first process involves an adsorption process whereby the effluent gases are adsorbed from the air stream on passing through the bed. The second process involves an oxidation-reduction reaction between the effluent gases and the bed of material. A typical reaction in the process would be as follows:-

$$2Fe_2O_3 + 6H_2S \rightarrow 6H_2O + 6S + 4Fe$$

While this method may be efficient, it requires a large bed surface contact area for the gas stream, involves considerable labour, requires a regeneration step for the catalyst bed and a cleaning step for the bed as, during the reaction, elemental sulphur and metal sulphates and sulphides will be formed which lead to clogging of the bed resulting in reduced porosity and overall reduction in efficiency which will be followed quite quickly by complete bed inactivity.

Variations in the type of material used in such beds is also well known. For example, Japanese Patent No. JP 55039233 (in the name of Shimizu Construction) discloses a bed of copper oxide and manganese oxide, together with activated carbon, treated with an alkali. Many other variations in the type of material used are known and are usually chosen based on their costs and their selectivity in removing certain gases. It is also well known to adhere the activated material to a carrier material, such as plastic, and to use it in this form as a packing material in a conventional packed column which are preferably employed for gas purification. However, using the material in this form in a packed column does not overcome the problems previously outlined.

Many liquid purification processes are also known to be used to remove effluent gases from air streams such as the well known "Stretford" process and the "Thylox/Glammarco-Ventrocoke" process. However, these processes involve the use of a liquid chemical scrubbing agent, have a build-up of thiosulphates, sulphates and sulphides in the recirculating scrubbing liquor and do not reduce the sulphur content to an acceptable level. These purification systems simply convert effluent from one phase to another, i.e. from that of the gaseous effluent phase to a liquid effluent phase, and as they are usually not very efficient, must be followed by a further separation process.

Finally, biological waste treatment processes for the removal of effluent gases from air streams have been increasing in popularity. However, for the system to work effectively, a healthy population of microorganisms have to be maintained.

However, if the pollutants in the waste gas stream fall below a critical concentration, often referred to as a "trough concentration", then there may not be sufficient pollutants (nutrients) for the microorganisms to survive. As a result, these processes are limited in their ability to handle variable loads. It is not just simply the variation in concentration of the sulphurous gases but the variation of other compounds that cause difficulties. Additionally, the biological conversion of $H_2S$ generates $H_2SO_4$ which causes the pH of the system to decrease and if uncontrolled, it can fall below 4.0 in turn causing inhibition of most biological activity, often referred to as "souring". Another major problem experienced in the use of any biological system is that it is dependent on the activity of the microorganisms present in the system. It is accordingly essential that the efficient seeding of a biological system with bacteria is carried out to ensure that the inoculum is not washed from the filter media before it becomes effectively established. This, in addition to the fact that it is necessary to ensure that the culture survives during periods of starvation as well as variations in the pH, makes the system both difficult and costly to operate and maintain.

It is known to use waste rubber as a filtration material in biological waste treatment plants such as for example described in German Patent Specification No. 22147038 (Gerstenberg). Essentially in this patent specification waste vehicle tyres are used for the formation of a packing material with sufficient voids to allow the passage of liquid therethrough. They do not have any chemical reaction with the liquid.

Further it is known from GB patent specification no. 2306466A (Sam Kuang Aqua Clear Inc.) to produce from waste tyres a powder and to use the powder to form a base on which an activated carbon is carried on the surface thereof which in turn allows micro-organisms to be attached thereto. The waste tyres are used for mechanical properties and for no other use.

German Patent No. 33 21 546 discloses a process and a device for separating off sulphur containing pollutants from the exhaust gas stream of large scale furnaces, wherein water impregnated porous rubber spheres are introduced into the exhaust flue. The $SO_2$ in the exhaust gas stream oxidises to a sulphuric acid waste product.

A common failure of these removal processes is that they require one or a combination of costly or undesirable operations, such as the need to use expensive material in the extraction process, chemical treatment of the material, periodic regeneration or replacement of the material, close monitoring and control of gas stream parameters, and finally, all produce a waste product, usually in the liquid form, comprising the removed gases and/or the chemical treating agent

Because these "clean up" processes generally represent significant problems and costs to manufacturing operations, any improvements in such processes would be of great importance.

Further there is a need for a chemical extraction process for an effluent air st containing sulphurous and other contaminate gases which process can be operated intermittently and which will proceed to operate immediately effluent gases are treated.

Therefore, it is an object of the present invention to provide a process which will successfully remove effluent gases from an air stream while minimising both capital and subsequent running costs, substantially eliminate the formation of waste products, and limit the amount of monitoring required.

## Statements of Invention

According to the invention, there is provided a chemical extraction process for an effluent air stream containing contaminant gases comprising passing the contaminated air stream through a gas contacting zone of reactant material, characterised in that the reactant material comprises shredded and/or granulated rubber material and water is sprayed on the rubber material at least intermittently.

Ideally the reactant material used is rubber tyres, waste tyres that have already outlived their useful economic life on vehicles and the like. The great advantage of using rubber tyres and in particular of waste rubber tyres, is that this is an environmentally friendly way of using the tyres and surprisingly the rubber tyres work remarkably effectively as a considerable amount of sulphurous gases are removed from air streams without need for extraneous chemicals or catalysts.

It has been found that the chemical extraction process is particularly suited for reactant material whose rubber material is mixed with carbon and oil or in other cases where the reactant material is mixed with metallic elements or indeed where the reactant material has been vulcanised or is of vulcanised rubber material. All of these are well known constructions of rubber tyres that have been found to be particularly effective.

Ideally the reactant material is preshredded. It has been found, as would be appreciated, and ideally the reactant material is shredded such that the largest lineal dimension ranges from 10 to 30 mm. Similarly the reactant material can be granulated or ground. The granulated material can be formed from chips of rubber bonded together with a suitable adhesive and reconstructed to any shape or size.

It is envisaged to be advantageous to grind the waste material to a suitable particle size and to reconstitute the rubber into larger filter elements of a shape which will provide efficient transmission of the gases as well as optimum surface area. As would be expected shredding or granulating the reactant material of rubber tyres produces a more coherent packing material. Without shredding the gas stream can pass too quickly through the reactant material without the effective removal of the contaminants as removal of the contaminants requires a very large gas contacting zone.

Ideally the water is supplied as a continuous fine mist carried in suspension in the air stream and may preferably be delivered in contra flow to the air stream. We have found that the fine mist of water produces an exceedingly good reaction between the contaminant gas and the reactant material and it has been found that considerable amount of the contaminants in the gas stream are removed without any difficulty.

Ideally the pH within the gas contacting zone is maintained at a pH greater than 6.0 and indeed when the pH falls below 6 the pH is raised by the addition of magnesium hydroxide. It been found in many instances that there is no need to control the pH, however, in certain instances it has been found necessary to control the pH as when it falls below 6 problems arise and the efficiency of contaminant removal can be reduced.

Ideally deposits of sulphurous compounds and other reactants are removed by flushing the gas contacting zone with water. In this latter case a surfactant may be added to the water. Back flushing of the rubber packing has been found to be relatively effective in keeping the plant free of sulphur and other deposits. Indeed the back flushing has been relatively simple to achieve. In a more difficult case, for example, the packing could be removed, agitated in water, scrubbed and then replaced. It has also been found that there is very little deterioration of the rubber with time. In some instances it may be necessary to provide by recirculation a final polishing treatment and in which case if an amount of contaminant gases is detected in the air stream on exiting the gas contacting zone and if the amount exceeds a predetermined level, the contaminant gases are re-airated through the gas contacting zone.

Further the invention provides an apparatus for the chemical extraction of contaminant gases from an air stream of the type comprising an enclosed structure having an air inlet and outlet and a gas contacting zone formed from a packing material providing a plurality of voids for the passage of air therethrough characterised in that the packing material is in the form of shredded and/or granulated rubber reactant material and in which a water spray nozzle is incorporated for the delivery of water into the gas contacting zone.

Ideally the structure is in the form of a column mounting the gas contacting zone above a water sump connected by a recirculation pump to the water spray nozzle mounted above the gas contacting zone and in which the inlet is adjacent the bottom of the gas contacting zone and the outlet adjacent the top.

In this latter embodiment a water demister is mounted adjacent the outlet and connected by a feed pipe to the sump.

Ideally additional washing bars as such are mounted above the gas contacting zone.

## Detailed Description of the Invention

The invention will be more clearly understood from the following description thereof, given by way of example only, with reference to the accompanying drawings in which:

Fig. 1 is a front partially diagrammatic view of a column used in the process;

Fig. 2 is a partially cut-away view of Fig. 1 showing the positional placement of the contacting zone; and

Fig. 3 is a side view of another apparatus.

Fig. 4 is a part schematic cut-away view similar to the apparatus of Fig. 3.

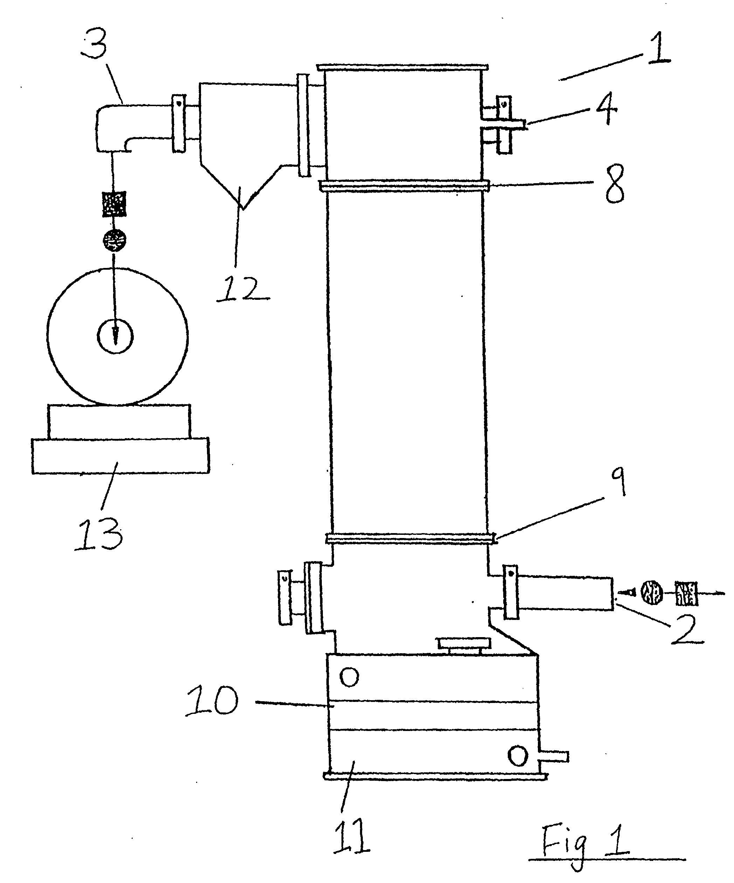

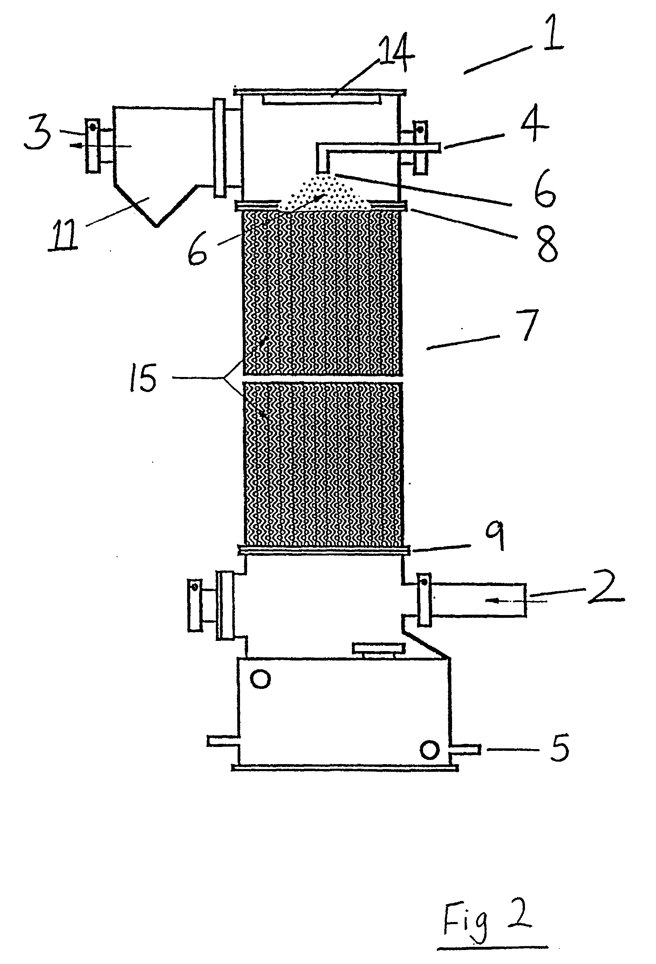

Referring to the drawings and initially to Fig. 1, there is illustrated a cylindrical column, indicated generally by the reference numeral 1 for removing sulphurous gases from a gas stream. The column 1 comprises a gaseous feed inlet pipe 2, a gaseous outlet pipe 3, a fresh water inlet pipe 4 for irrigation water, and a waste water outlet pipe 5. Referring to Fig. 2, a water spray nozzle 6 is connected to the fresh water inlet pipe 4 and placed above the top of a gas contacting zone, indicated generally by the reference numeral 7. The contacting zone 7 is located between porous packing support plates 8 and 9. The column 1 further comprises a solid filter 10 only the exterior of which is shown in Fig. 1, mounted at the waste water outlet pipe 5, in a sump 11. A mist eliminator 12 mounted at the gaseous outlet pipe 3 feeds a ventilator 13 mounted downstream of the mist eliminator 11. A fan 14 is located at the top of the column 1. The contacting zone 7 contains a waste rubber tyre packing 15, which may be of a canvas or radial type, or a mixture of both and is packed and supported within the packing porous support plates 8 and 9, as shown in Fig. 2.

In use, for example a sulphurous gas stream is fed into the column 1 at the gaseous feed inlet pipe 2. The sulphurous gas stream is drawn through the contacting zone 7 containing the rubber tyre packing 15 by the fan 14. A fresh water stream is fed into the column 1 through the fresh water inlet pipe 4 and is sprayed from the water spray nozzle 6 onto the rubber tyre packing 15 so that the fresh water stream is in a counter-current flow with the gaseous stream forming a mist of fine droplets. The rubber should be maintained with a wetted surface. While irrigation water could be supplied by an intermittent spray, it has been found advantageous to have a continuous spray such that there is a water mist in the contacting zone.

The sulphurous gases, on passing through the gas contacting zone 7, come into contact with the rubber tyre packing 15 and a catalytic reaction occurs between the gas, the water and the rubber. The sulphur precipitates onto the rubber and is removed from the gas stream. The water stream, on exiting the gas contacting zone 7, is passed through the solid filter 10 wherein any solid particles produced in the contacting zone 7 are removed before the water passes through the waste water outlet pipe 5 to drain. The purified gaseous stream passes through the mist eliminator 11 to reduce its moisture content therein before it is passed through the outlet pipe 3 to the ventilator 13.

The rate at which the sulphurous gas is drawn through the gas contacting zone 7 is determined largely by the packing arrangement of the waste rubber tyre packing 14 and the rotational speed of the fan 13. These parameters can easily be altered so as to increase contact time between the sulphurous gas stream and the waste rubber tyre packing 14 when the concentration of the sulphurous gases is high and to reduce contact time when the concentration of the sulphurous gases is low. This system is thus quite easily able to cope with variable loads.

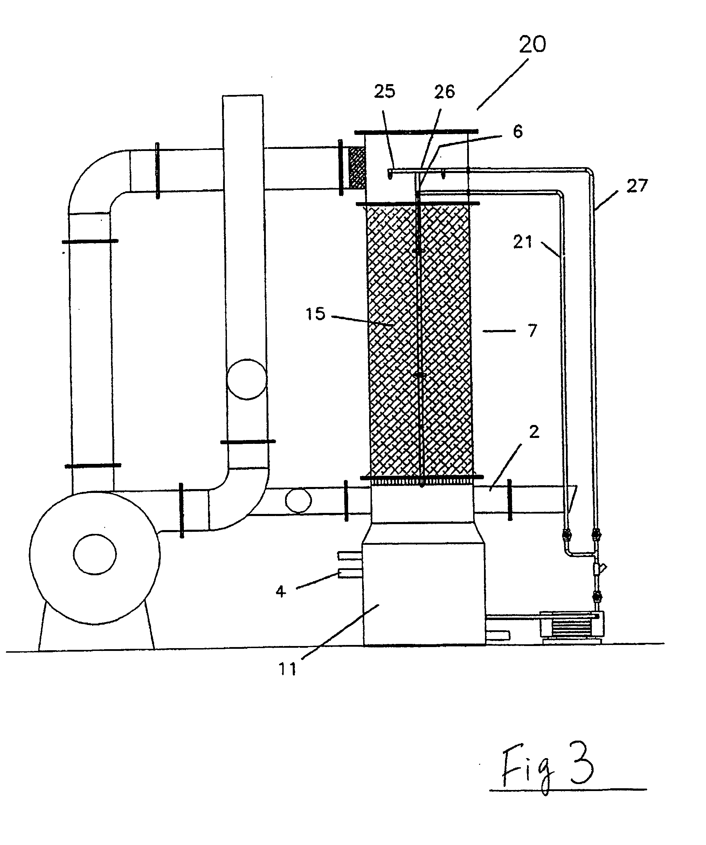

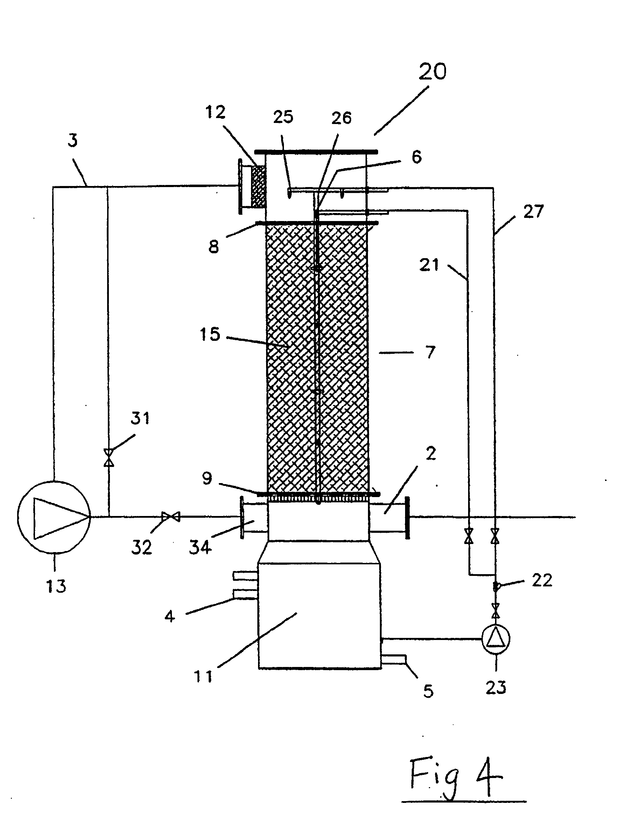

Referring to Figs. 3 and 4 there is provided an alternative construction of a cylindrical column indicating generally by the reference numeral 20 in which parts similar to those described with reference of previous drawings are identified by the same reference numerals.

The water nozzle 6 is connected by a recirculating pipe 21 through a strainer 22 by a recirculating pump 23 to the sump 11. Backwash nozzles 25 are mounted on a spray bar 26 fed by a further pipe 27 by the pump 23.

In this embodiment the outlet pipe 3 is connected by a fan to an outlet valve 31 connected to atmosphere or recycled through a valve 32 back through another air inlet 34 opposite the air inlet 2 for recirculation.

In use, it will be seen that irrigation water is now recycled and similarly that the nozzles 25 can be used for cleaning of the tyres.

Optionally any detergent can be used with the water to further clean the tyre material and, as already mentioned, air recirculation may be a feature if final polishing treatment is required. It is envisaged that pH meters and gas concentration meters may be mounted in several places in the column and if required pH may be altered when, for example, the pH goes below 6. This could be advantageously done by the addition of magnesium hydroxide and in particular magnesium hydroxide in paste form.

A particular advantage of the present invention is that it is an efficient means of removing sulphurous gases from a variety of air streams using a waste rubber product. In fact, the disposal of used tyres is actually a problem in most EU countries.

Other advantages of the process includes the non-use of extraneous chemicals or catalysts, the production of practically no waste, and basic caretaking of the filter is all that is required once installed.

It is also envisaged that a number of these columns could be used in series or parallel.

It is further envisaged that the waste tyre rubber can have any packing arrangement and may be processed to take any shape desirable.

It will also be appreciated that while the embodiment described relates to the extraction of sulphurous gases, it could equally well be applied to other contaminants such as volatile organic compounds.

It will be appreciated that while a single spray nozzle is used in the embodiments described, any number of nozzles with a variety of arrangements may be employed.

It will be further appreciated that other waste rubber material may be used in the process, such as waste conveyor belts, tyre mud flaps, waste from rubber or tyre production plants.

It will also be appreciated that the process may use new tyres or rubber material of a purer form mixed with scrap metal.

The invention will be more easier understood by way of the following Examples:

Example 1

This Example describes the results from a pilot plant whereby the reactant material used was waste rubber tyres. The pilot plant was placed on a selected waste water treatment plant treating contaminant gases from sludge tanks.

The tyres were shredded to have a maximum lineal dimension ranging from 10-30 mm and 0.5 m$^3$ of these tyres were used to fill the pilot plant.

Water was sprayed on a once through basis. A contact time of the contaminant gas with the reactant material of approximately 10 seconds was employed.

The contaminant airstream was drawn from sludge holding tanks, which receive sludge from tankers periodically. This results in a fluctuating airstream with peaks of up to 200 ppm $H_2S$

The following table catalogues a day of recorded results using Draeger pump and tubes and a Jerome $H_2S$ analyser.

| Time | $H_2S$ in (ppm) | $H_2S$ out (ppm) | Removal Efficiency |
|---|---|---|---|
| 10.30 | 5.3 | 1.7 | 68 |
| 11.10 | 3.8 | 1.1 | 71 |
| 11.30 | 4.8 | 1.3 | 73 |
| 12.00 | 5.4 | 1.4 | 74 |
| 12.30 | 11 | 2.6 | 76 |
| 12.50 | 11 | 2.4 | 78 |
| 1.15 | 11 | 2.3 | 79 |
| 1.30 | 20 | 7.3 | 64 |
| 1.45 | 11 | 2.5 | 77 |

(continued)

| Time | H$_2$S in (ppm) | H$_2$S out (ppm) | Removal Efficiency |
|---|---|---|---|
| 2.00* | 49 | 23 | 53 |
| 2.15 | 120 | 85 | 30 |
| 2.30 | 123 | 90 | 27 |
| 2.45 | 110 | 75 | 32 |
| 3.00 | 140 | 100 | 29 |
| 3.15 | 130 | 95 | 27 |
| 3.45 | 95 | 65 | 32 |
| 9.20 | 85 | 55 | 35 |

*Receipt of sludge from tanker

The results indicate that with H$_2$S concentrations of up to 20 ppm, removal efficiencies in the order of 70% were achieved. However, when H$_2$S concentrations increased, the actual amount of H$_2$S ppm removed by the system increased, but the removal efficiency decreased. This indicates the need for increased contact time or recirculation of the contaminated air through the system.

Example 2

Example 2 describes the results from a pilot plant installed at a food processing plant The reactant material used was waste rubber tyres, shredded to a lineal dimension of 10-30 mm and 0.3 m$^3$ of these tyres were used to fill the plant. The column containing the reactant material was used to treat a heavily H$_2$S loaded airstream coming from an anaerobic digester. The volume flow through the column was 150 - 200 m$^3$/hr. This resulted in a contact time of the H$_2$S contaminated airstream with the reactant material of 7-10 seconds.

The following table catalogs the results over a period of several days.

| Day | H$_2$S in (ppm) | H$_2$S out (ppm) | Drainage water pH | Removal efficiency % |
|---|---|---|---|---|
| 1 | 2500 | 2100 | 6.0 | 16 |
| 2 | 1000 | 800 | 6.0 | 20 |
| 3 | 1000 | 800 | 6.0 | 20 |
| 4 | 3000 | 2600 | 6.2 | 13 |
| 5 | 2500 | 2100 | 5.9 | 16 |
| 7 | 1950 | 1500 | 6.2 | 23 |
| 8 | 2200 | 1800 | 6.2 | 18 |
| 9 | 2000 | 1750 | 6.1 | 13 |
| 9 | 1900 | 1600 | 6.1 | 16 |
| 9 | 2000 | 1800 | 6.1 | 10 |
| 10 | 2000 | 1600 | 6.4 | 20 |
| 10 | 1800 | 1600 | 6.4 | 11 |
| 10 | 1800 | 1400 | 6.4 | 22 |
| 14 | 2000 | 1800 | 6.1 | 10 |
| 15 | 1780 | 1650 | 6.1 | 7 |
| 17 | 3000 | 2500 | 6.1 | 17 |
| 18 | 2150 | 1750 | - | 19 |

(continued)

| Day | H$_2$S in (ppm) | H$_2$S out (ppm) | Drainage water pH | Removal efficiency % |
|---|---|---|---|---|
| 19 | 1800 | 1800 | - | 0 |
| 21 | 1800 | 1800 | 6.2 | 0 |
| 22 | 1900 | 1800 | 6.0 | 5 |
| Note that multiple readings were performed on certain days for the purpose of verification of the H$_2$S analysis. | | | | |

The tyres were subsequently removed and washed with a high powered hose. After replacement back in the filter a removal efficiency of up to 20% was again achieved.

A second column containing 0.3m$^3$ of shredded tyres was added in parallel to the first to further treat the airstream. The airflow remained at approximately 150-200m$^3$/hr. By having two columns in parallel at the same air flow, the air flow going through each individual column was half of what it originally was approximately ranging from 75-100 m$^3$/hr.

The following table catalogs the results:

| Day | H$_2$S in (ppm) | H$_2$S out (ppm) | Removal efficiency % |
|---|---|---|---|
| 98 | 1900 | 1400 | 26 |
| 99 | >2000 | 1100 | >45 |
| 100 | 2000 | 1100 | 45 |
| 102 | 1800 | 1600 | 11 |
| 420 | 5000 | 4100 | 18 |
| 420 | 5000 | 4000 | 20 |
| 420 | 4500 | 3600 | 20 |
| 420 | 4750 | 3700 | 22 |

The additional column had the effect of increasing the contact time and the efficiency of H$_2$S removal increased compared to before.

A further two filters each containing 0.3 m$^3$ shredded tyres were added in parallel. After a short period the air flow was increased to 350 m$^3$/hr. Again with 4 columns in parallel, with an air flow of 350m$^3$/hr, each individual column had an air flow of approximately 87.5 m$^3$/hr.

| Day | H$_2$S in (ppm) | H$_2$S out (ppm) | Air volume | Removal |
|---|---|---|---|---|
| 504 | 7000 | 4000 | 130 | 43 |
| 508 | 5000 | 3500 | 300 | 30 |
| 511 | 2000 | 1500 | 350 | 25 |

Despite the increased air flow, by adding the additional columns, the contact time increased and the efficiency of removal remained high.

Example 3

Example 3 describes the results from a pilot plant installed at a sewage treatment plant.

The following table catalogs a day of recorded results.

| Time | Retention Time (secs) | H$_2$S in (ppm) | H$_2$S out (ppm) | Removal Efficiency (%) |
|---|---|---|---|---|
| 10.00 | 10 | 22 | 1.8 | 91.2 |
| 10.05 | 10 | 27 | 2.0 | 92.6 |
| 10.10 | 10 | 17 | 1.4 | 91.8 |

(continued)

| Time | Retention Time (secs) | $H_2S$ in (ppm) | $H_2S$ out (ppm) | Removal Efficiency (%) |
|---|---|---|---|---|
| 10.25 | 10 | 24 | 2.3 | 90.4 |
| 10.35 | 10 | 20 | 1.7 | 91.5 |
| 10.40 | 10 | 18 | 1.6 | 91.1 |
| 11.00 | 5 | 86 | 40 | 53.5 |
| 11.10 | 5 | 100 | 46 | 54 |
| 11.20 | 5 | 90 | 40 | 55.5 |
| 11.30 | 10 | 88 | 25 | 71.6 |
| 11.45 | 10 | 92 | 22 | 76.1 |
| 11.55 | 10 | 86 | 21 | 75.6 |
| 12.00 | 20 | 100 | 9.4 | 90.6 |
| 12.15 | 20 | 104 | 16 | 84.6 |
| 12.30 | 20 | 110 | 10.2 | 89.9 |

The results indicate that by increasing the contact time from 5 to 20 seconds, the removal efficiency of the $H_2S$ removed by the system increased from 50 to 90%.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

Many variations on the specific embodiments of the invention described will be readily apparent and accordingly the invention is not limited to the embodiments hereinbefore described but may be varied in both construction and detail within the scope of the claims.

**Claims**

1. A chemical extraction process for an effluent air stream containing contaminant gases comprising passing the contaminated air stream through a gas contacting zone (7) of reactant material, **characterised in that** the reactant material comprises shredded and/or granulated rubber material and water is sprayed on the rubber material at least intermittently.

2. A process as claimed in claim 1 wherein the reactant material is rubber tyres.

3. A process as claimed in claims 1 or 2 wherein the reactant material comprises rubber material mixed with carbon and oil.

4. A process as claimed any preceding claim wherein the reactant material comprises rubber material mixed with metallic elements.

5. A process as claimed in any preceding claim wherein the reactant material comprises vulcanised rubber material.

6. A process as claimed in any preceding claim wherein the reactant material is shredded such that the largest lineal dimension ranges from 10 to 30 mm.

7. A process as claimed in any preceding claim in which the water is supplied as a continuous fine mist carried in suspension in the air stream.

8. A process as claimed in claim 7 in which the water is delivered in contra flow to the air stream.

9. A process as claimed in any preceding claim in which the pH within the gas contacting zone is maintained at a pH greater than 6.0.

10. A process as claimed in claim 9 in which when the pH falls below 6.0 pH is raised by the addition of magnesium hydroxide.

11. A process as daimed in any preceding claim in which deposits of sulphurous compounds and other reactants are removed by flushing the gas contacting zone with water.

12. A process as claimed in claim 11 in which a surfactant is added to the water.

13. A process as daimed in any preceding claim in which if an amount of contaminant gases is detected in the air stream on exiting the gas contacting zone (7) and if the amount exceeds a predetermined level, the contaminant gases are re-aerated through the gas contacting zone (7).

14. Apparatus for the chemical extraction of contaminant gases from an air stream of the type comprising an enclosed structure (1) having an air inlet (2) and outlet (3) and a gas contacting zone (7) formed from a packing material providing a plurality of voids for the passage of air therethrough **characterised in that** the packing material is in the form of shredded and/or granulated rubber reactant material and in which a water spray nozzle (6) is incorporated for the delivery of water into the gas contacting zone (7).

15. Apparatus as claimed in claim 14 in which the structure is in the form of a column (1) mounting the gas contacting zone (7) above a water sump (11) connected by a recirculation pump (23) to the water spray nozzle (6) mounted above the gas contacting zone (7) and in which the inlet is adjacent the bottom of the gas contacting zone and the outlet adjacent the top.

16. Apparatus as claim 15 in which a water demister (12) is mounted adjacent the outlet and connected by a feed pipe (21) to the sump (11).

17. Apparatus as claimed in any of claims 15 and 16 in which additional washing spray bars (26) are mounted above the gas contacting zone (7).


**Patentansprüche**

1. Chemisches Extraktionsverfahren für einen ausströmenden Luftstrom, der Verunreinigungsgase enthält, wobei das Verfahren das Leiten des verunreinigten Luftstroms durch einen Gaskontaktbereich (7) eines Reaktantmaterials umfasst, **dadurch gekennzeichnet, dass** das Reaktantmaterial ein zerfasertes und/oder granuliertes Gummimaterial umfasst und zumindest periodisch Wasser auf das Gummimaterial gesprüht wird.

2. Verfahren nach Anspruch 1, wobei das Reaktantmaterial Gummireifen sind.

3. Verfahren nach Anspruch 1 oder 2, wobei das Reaktantmaterial ein mit Kohlenstoff und Öl gemischtes Gummimaterial umfasst.

4. Verfahren nach einem der vorhergehenden Ansprüche, wobei das Reaktantmaterial ein mit metallischen Elementen gemischtes Gummimaterial umfasst.

5. Verfahren nach einem der vorhergehenden Ansprüche, wobei das Reaktantmaterial ein vulkanisiertes Gummimaterial umfasst.

6. Verfahren nach einem der vorhergehenden Ansprüche, wobei das Reaktantmaterial derart zerfasert ist, dass die größte Längenabmessung im Bereich von 10 bis 30 mm liegt.

7. Verfahren nach einem der vorhergehenden Ansprüche, wobei das Wasser als ein ununterbrochener feiner Nebel zugeführt wird, der in Suspension in dem Luftstrom mitgeführt wird.

8. Verfahren nach Anspruch 7, wobei das Wasser der Luftströmung entgegengesetzt zugeführt wird.

9. Verfahren nach einem der vorhergehenden Ansprüche, wobei der pH-Wert in dem Gaskontaktbereich auf einem pH-Wert gehalten wird, der größer ist als 6,0.

10. Verfahren nach Anspruch 9, wobei der pH-Wert, wenn er unter einen pH-Wert von 6,0 fällt, durch die Zugabe von Magnesiumhydroxid erhöht wird.

11. Verfahren nach einem der vorhergehenden Ansprüche, wobei Ablagerungen von Schwefelverbindungen oder anderen Reaktantmaterialien durch Spülen des Gaskontaktbereichs mit Wasser entfernt werden.

12. Verfahren nach Anspruch 11, wobei dem Wasser ein Tensid hinzugefügt wird.

13. Verfahren nach einem der vorhergehenden Ansprüche, wobei, falls beim Verlassen des Gaskontaktbereichs (7) eine Menge an Verunreinigungsgasen in dem Luftstrom erfasst wird und falls die Menge ein vorherbestimmtes Niveau überschreitet, die Verunreinigungsgase erneut durch den Gaskontaktbereich (7) geleitet werden.

14. Vorrichtung für die chemische Extraktion von Verunreinigungsgasen aus einem Luftstrom der Art, die eine eingeschlossene Konstruktion (1) mit einem Lufteinlass (2) und -auslass (3) und einem Gaskontaktbereich (7) umfasst, der aus einem Packungsmaterial gebildet ist, das eine Vielzahl von Hohlräumen zum Luftdurchlass bereitstellt, **dadurch gekennzeichnet, dass** das Packungsmaterial in Form eines zerfaserten und/oder granulierten Gummi-Reaktantmaterials vorliegt, in das eine Wassersprühdüse (6) für die Zufuhr von Wasser in den Gaskontaktbereich (7) integriert ist.

15. Vorrichtung nach Anspruch 14, wobei die Konstruktion die Form einer Säule (1) aufweist, die den Gaskontaktbereich (7) über einem Wassersumpf (11) befestigt, der durch eine Umlaufpumpe (23) mit der Wassersprühdüse (6) verbunden ist, die über dem Gaskontaktbereich (7) befestigt ist, und wobei sich der Einlass benachbart zum Boden des Gaskontaktbereichs und der Auslass benachbart zur Oberseite befindet.

16. Vorrichtung nach Anspruch 15, wobei ein Wasser-Entnebler (12) benachbart zum Auslass befestigt und mit Hilfe eines Zufuhrrohrs (21) mit dem Sumpf (11) verbunden ist.

17. Vorrichtung nach einem der Ansprüche 15 und 16, wobei zusätzliche Waschsprühstangen (26) über dem Gaskontaktbereich (7) befestigt sind.

**Revendications**

1. Processus d'extraction chimique d'un courant d'air effluent contenant des gaz contaminants comprenant le passage du courant d'air contaminé à travers une zone de contact avec les gaz (7) de matière réactive, **caractérisé en ce que** la matière réactive comprend une matière de caoutchouc déchiqueté et/ou granulé et de l'eau est vaporisée sur la matière de caoutchouc au moins par intermittence.

2. Processus selon la revendication 1, dans lequel la matière réactive est constituée par des pneus en caoutchouc.

3. Processus selon les revendications 1 ou 2, dans lequel la matière réactive comprend de la matière de caoutchouc mélangée à du charbon et de l'huile.

4. Processus selon l'une quelconque des revendications précédentes, dans lequel la matière réactive comprend de la matière de caoutchouc mélangée à des éléments métalliques.

5. Processus selon l'une quelconque des revendications précédentes, dans lequel la matière réactive comprend une matière de caoutchouc vulcanisé.

6. Processus selon l'une quelconque des revendications précédentes, dans lequel la matière réactive est déchiquetée de telle sorte que la plus grande dimension linéaire aille de 10 à 30 mm.

7. Processus selon l'une quelconque des revendications précédentes, dans lequel de l'eau est fournie sous forme de fine brume continue portée en suspension dans le courant d'air.

8. Processus selon la revendication 7, dans lequel l'eau est fournie en contre-courant par rapport au courant d'air.

9. Processus selon l'une quelconque des revendications précédentes, dans lequel le pH dans la zone de contact avec les gaz est maintenu à un pH supérieur à 6,0.

10. Processus selon la revendication 9, dans lequel quand le pH chute en dessous de 6,0 le pH est augmenté par l'addition d'hydroxyde de magnésium.

11. Processus selon l'une quelconque des revendications précédentes, dans lequel des dépôts de composés sulfureux et autres réactants sont éliminés en purgeant la zone de contact avec les gaz avec de l'eau.

12. Processus selon la revendication 11, dans lequel un agent de surface est ajouté à l'eau.

13. Processus selon l'une quelconque des revendications précédentes, dans lequel si une quantité de gaz contaminants est détectée dans le courant d'air à la sortie de la zone de contact avec les gaz (7) et si la quantité dépasse un niveau prédéterminé, les gaz contaminants sont aérés à nouveau à travers la zone de contact avec les gaz (7).

14. Dispositif d'extraction chimique de gaz contaminants d'un courant d'air du type comprenant une structure close (1) ayant une admission d'air (2) et une sortie (3) et une zone de contact avec les gaz (7) formée depuis une matière d'étoupe fournissant une pluralité de vides pour le passage d'air à travers, **caractérisé en ce que** la matière d'étoupe est en forme de matière réactive de caoutchouc déchiquetée et/ou granulée et **en ce qu'**une buse de pulvérisation d'eau (6) est incorporée pour la délivrance d'eau dans la zone de contact avec les gaz (7).

15. Dispositif selon la revendication 14, dans lequel la structure a la forme d'une colonne (1) montant la zone de contact avec les gaz (7) au-dessus d'un réservoir d'eau (11) connecté par une pompe de recyclage (23) à la buse de pulvérisation d'eau (6) montée au-dessus de la zone de contact avec les gaz (7) et dans lequel l'admission est adjacente au bas de la zone de contact avec les gaz et la sortie est adjacente au haut.

16. Dispositif selon la revendication 15, dans lequel un dispositif anti-buée d'eau (12) est monté à proximité de la sortie et connecté par un tuyau d'alimentation (21) au réservoir (11).

17. Dispositif selon l'une quelconque des revendications 15 et 16, dans lequel des barres de pulvérisation de lavage supplémentaires (26) sont montées au-dessus de la zone de contact avec les gaz (7).

3

1

4

8

12

9

2

13

10

11

Fig 1

Fig 2

Fig 3

Fig 4